# EUROPÄISCHE PATENTANMELDUNG

(11) **EP 4 527 808 A1**
(43) Veröffentlichungstag der Anmeldung: **26.03.2025**
(21) Anmeldenummer: 23198551.6
(22) Anmeldetag: 20.09.2023
(51) Int. Cl.: C03C 3/095, C03C 3/097, C03C 4/00, C03C 4/12, C03C 10/04

(54) **FLUORESZIERENDE GLÄSER UND GLASKERAMIKEN MIT HOHEM GEHALT AN CER UND ZINN**

(71) Anmelder: Ivoclar Vivadent AG, 9494 Schaan (LI)
(72) Erfinder: Dittmer, Marc, 6800 Feldkirch (AT); Ritzberger, Christian, 9472 Grabs (CH); Rampf, Markus, 7212 Seewis Dorf (CH)
(74) Vertreter: Uexküll & Stolberg

(57) **Zusammenfassung**

Die Erfindung betrifft Gläser und Glaskeramiken mit hohem Gehalt an Cer und Zinn, die die folgenden Komponenten enthalten:

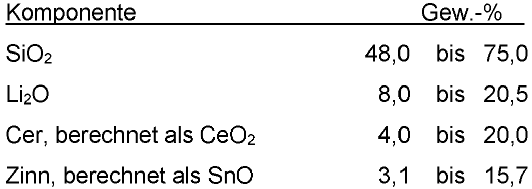

und sich insbesondere zur Herstellung von Dentalrestaurationen eignen, deren Fluoreszenzeigenschaften weitgehend denen der natürlichen Zähne entsprechen.

## Beschreibung

Die vorliegende Erfindung betrifft Gläser und Glaskeramiken, die einen hohen Gehalt an Cer und Zinn haben und sich insbesondere zur Herstellung von Dentalrestaurationen eignen, deren Fluoreszenzeigenschaften weitgehend denen der natürlichen Zähne entsprechen. Die Erfindung betrifft auch ein Verfahren zur Herstellung der erfindungsgemäßen Gläser und Glaskeramiken sowie deren Verwendung als Mischungskomponente und als Dentalmaterial, insbesondere zur Herstellung dentaler Restaurationen.

Glaskeramiken werden in der Zahnheilkunde aufgrund ihrer guten mechanischen und optischen Eigenschaften insbesondere zur Herstellung von Dentalkronen und kleinen Brücken eingesetzt.

WO 2017/032745 A1 beschreibt Lithiumsilikat-Tiefquarz-Glaskeramiken für den Einsatz in der Zahnheilkunde. Die Glaskeramiken können Färbemittel und Fluoreszenzmittel enthalten, die bevorzugt ausgewählt sind aus Bi₂O₃ und Bi₂O₅ und anorganischen Pigmenten und/oder Oxiden von d- und f-Elementen, wie z.B. den Oxiden von Mn, Fe, Co, Pr, Nd, Tb, Er, Dy, Eu und Yb.

Aus der EP 3 696 150 A1 sind Gläser und Glaskeramiken bekannt, die 0,05 bis 5,0 Gew.-% Europium, berechnet als Eu₂O₃, enthalten, um den aus den Gläsern und Glaskeramiken hergestellten Dentalrestaurationen vorteilhafte Fluoreszenzeigenschaften zu verleihen.

Aus W. Buchalla, "Comparative Fluorescence Spectroscopy Shows Differences in Non-Cavitated Enamel Lesions", Caries Res. 2005, 39, 150-156 ist bekannt, dass natürliche Zähne unter ultraviolettem Licht eine bläulich-weiße Fluoreszenz mit Wellenlängen im Bereich von 400 bis 650 nm zeigen.

Rukmani et al., J. Am. Ceram. Soc. 2007, 90, 706-711, beschreiben den Einfluss von V- und Mn-Färbemitteln auf das Kristallisationsverhalten und die optischen Eigenschaften von Ce-dotierten Lithiumdisilikat-Glaskeramiken. Zur Herstellung der Glaskeramiken wird eine Mischung aus den Ausgangsmaterialien SiO₂, ZrO₂, Li₂CO₃, K₂CO₃, MgCO₃ und Al(PO₃)₃ mit CeO₂, V₂O₅ und MnO₂ hergestellt, die Mischung bei 1500°C in Platintiegeln geschmolzen, abgekühlt und anschließend in einem Röhrenofen unter Luftzufuhr mehreren Wärmebehandlungen unterzogen.

EP 3 696 149 A1 beschreibt Gläser und Glaskeramiken mit Gehalt an Cer und Zinn, die fluoreszieren, wenn sie mit Licht einer Wellenlänge von 366 nm angeregt werden. Bei Anregung mit Licht einer Wellenlänge von 395 nm zeigen die beschriebenen Gläser und Glaskeramiken jedoch keine Fluoreszenz.

Es hat sich gezeigt, dass die aus dem Stand der Technik bekannten Gläser und Glaskeramiken unzureichende Fluoreszenzeigenschaften aufweisen und insbesondere unter Licht mit einer Wellenlänge von etwa 380 bis 430 nm die Fluoreszenzeigenschaften des natürlichen Zahnmaterials nicht in ausreichendem Maße imitieren können. Es besteht insbesondere ein Bedarf an Gläsern und Glaskeramiken, die auch im besonders langwelligen UV-Bereich, wie z.B. 380 bis 430 nm, gute Fluoreszenzeigenschaften aufweisen. Licht dieser Wellenlängen wird häufig als "Schwarzlicht" in Vergnügungsstätten wie Nachtclubs eingesetzt. Dort können daher Dentalrestaurationen mit unzureichenden Fluoreszenzeigenschaften unter dem Einfluss von langwelligem UV-Licht als Restaurationen erkennbar sein oder als Zahnlücken oder Defekte wahrgenommen werden.

Der Erfindung liegt die Aufgabe zugrunde, Gläser und Glaskeramiken bereitzustellen, die eine mit dem natürlichen Zahnmaterial vergleichbare Fluoreszenz zeigen und sich somit insbesondere zur Herstellung von dentalen Restaurationen eignen, die nicht nur gute mechanische Eigenschaften aufweisen, sondern auch die Fluoreszenzeigenschaften des natürlichen Zahnmaterials bei Anregungswellenlängen im langwelligen UV-Bereich, wie z.B. 380 bis 430 nm, weitgehend imitieren können. Die Gläser und Glaskeramiken sollen sich auch als Mischungskomponenten zur Einstellung der Fluoreszenzeigenschaften anderer Gläser und Glaskeramiken eignen.

Diese Aufgabe wird erfindungsgemäß gelöst durch die Gläser und Glaskeramiken mit Gehalt an Cer und Zinn nach den Ansprüchen 1 bis 11 sowie die Verwendungen dieser Gläser und Glaskeramiken nach den Ansprüchen 14 und 15. Die Erfindung ist ebenfalls auf das Verfahren zur Herstellung der erfindungsgemäßen Gläser und Glaskeramiken nach den Ansprüchen 12 und 13 sowie das Verfahren zur Herstellung einer dentalen Restauration nach Anspruch 16 gerichtet.

Die Erfindung betrifft ein Glas und eine Glaskeramik mit Gehalt an Cer und Zinn, die sich dadurch auszeichnen, dass sie die folgenden Komponenten enthalten

| Komponente | Gew.-% |
|---|---|
| SiO₂ | 48,0 bis 75,0 |
| Li₂O | 8,0 bis 20,5 |
| Cer, berechnet als CeO₂ | 4,0 bis 20,0 |
| Zinn, berechnet als SnO | 3,1 bis 15,7. |

Es hat sich überraschend gezeigt, dass das erfindungsgemäße Glas und die erfindungsgemäße Glaskeramik gegenüber dem Stand der Technik verbesserte Fluoreszenzeigenschaften insbesondere unter Einwirkung von UV-Licht mit einer Wellenlänge von 380 bis 430 nm, wie z.B. 395 nm, zeigen. Es wurde im Rahmen der vorliegenden Erfindung festgestellt, dass der Einsatz von höheren Anteilen an Cer und Zinn als aus dem Stand der Technik bekannt dazu führt, dass sich die Fluoreszenzeigenschaften von Gläsern und Glaskeramiken verändern. Insbesondere hat sich gezeigt, dass durch den Einsatz höherer Anteile an Cer und Zinn, eine deutlich sichtbare Fluoreszenz auch bei Anregungswellenlängen im Bereich von 380 bis 430 nm erzielt werden kann. Die erfindungsgemäßen Gläser und Glaskeramiken haben sich daher als besonders geeignet zur Nachahmung des natürlichen Zahnmaterials erwiesen.

Ohne Beschränkung auf eine bestimmte Theorie wird angenommen, dass sich durch die Verwendung größerer Mengen an Cer und Zinn die Fluoreszenzeigenschaften der Ce³⁺-Ionen verändern und sich das Anregungsspektrum verschiebt, so dass auch bei einer Anregung mit Licht einer Wellenlänge im Bereich von 380 bis 430 nm, wie z.B. 395 nm, in Gläsern und Glaskeramiken eine deutliche Fluoreszenz wahrgenommen werden kann.

Erfindungsgemäß ist es bevorzugt, dass das Glas und die Glaskeramik 50,0 bis 72,0, insbesondere 52,0 bis 70,1 Gew.-% und besonders bevorzugt 57,0 bis 70,1 SiO₂ enthalten.

Es ist weiter bevorzugt, dass das Glas und die Glaskeramik 9,0 bis 19,0, insbesondere 10,1 bis 18,2 und besonders bevorzugt 10,9 bis 17,3 Gew.-% Li₂O enthalten.

Vorzugsweise enthalten das Glas und die Glaskeramik 4,3 bis 19,0, insbesondere 4,7 bis 18,5, weiter bevorzugt 5,3 bis 17,9, besonders bevorzugt 5,8 bis 16,6 und ganz besonders bevorzugt 6,1 bis 16,0 Gew.-% Cer, berechnet als CeO₂.

Es ist weiter bevorzugt, dass das Glas und die Glaskeramik 3,4 bis 14,9, insbesondere 3,7 bis 14,5, weiter bevorzugt 4,1 bis 14,0, besonders bevorzugt 4,6 bis 13,0 und ganz besonders bevorzugt 4,7 bis 12,6 Gew.-% Zinn, berechnet als SnO, enthalten.

Es ist außerdem bevorzugt, dass das molare Verhältnis von Cer, berechnet als CeO₂, zu Zinn, berechnet als SnO, im Bereich von 1,5:1 bis 1:1,5, insbesondere 1,2:1 bis 1:1,2 und weiter bevorzugt 1,1:1 bis 1:1,1 liegt und besonders bevorzugt 1,0:1,0 beträgt.

In einer weiteren bevorzugten Ausführungsform enthalten das Glas und die Glaskeramik

| Komponente | Gew.-% |
|---|---|
| SiO₂ | 50,0 bis 72,0 Gew.-%, |
| Li₂O | 9,0 bis 19,0 Gew.-%, |
| Cer, berechnet als CeO₂ | 4,3 bis 19,0 Gew.-% und |
| Zinn, berechnet als SnO und insbesondere | 3,4 bis 14,9 Gew.-% |
| SiO₂ | 52,0 bis 70,1 Gew.-%, |
| Li₂O | 10,1 bis 18,2 Gew.-%, |
| Cer, berechnet als CeO₂ | 4,7 bis 18,5 Gew.-% und |
| Zinn, berechnet als SnO und besonders bevorzugt | 3,7 bis 14,5 Gew.-% |
| SiO₂ | 52,0 bis 70,1 Gew.-%, |
| Li₂O | 10,1 bis 18,2 Gew.-%, |
| Cer, berechnet als CeO₂ | 5,3 bis 17,9 Gew.-% und |
| Zinn, berechnet als SnO | 4,1 bis 14,0 Gew.-%. |

In einer besonderen Ausführungsform enthalten das Glas und die Glaskeramik ferner Terbium. Bevorzugt enthalten das Glas und die Glaskeramik 0 bis 3,5, insbesondere 0 bis 2,6 und besonders bevorzugt 0,1 bis 2,6 Gew.-% Terbium, berechnet als Tb₄O₇.

Auch ist es bevorzugt, dass das Glas und die Glaskeramik weiteres Alkalimetalloxid Me^{l}₂O in einer Menge 0 bis 11,5, insbesondere 1,0 bis 10,5, weiter bevorzugt 2,0 bis 9,3 und besonders bevorzugt 2,0 bis 6,0 Gew.-% enthalten. Der Begriff "weiteres Alkalimetalloxid Me^{l}₂O" bezeichnet Alkalimetalloxid mit Ausnahme von Li₂O, wobei dieses Me^{l}₂O insbesondere ausgewählt ist aus Na₂O, K₂O, Rb₂O und/oder Cs₂O und bevorzugt ausgewählt ist aus Na₂O und/oder K₂O.

Es ist ferner bevorzugt, dass das Glas und die Glaskeramik 0 bis 11,0 Gew.-%, insbesondere 0 bis 9,3, weiter bevorzugt 1,0 bis 8,0 und besonders bevorzugt 2,5 bis 5,0 Gew.-% K₂O enthalten.

Des Weiteren ist es bevorzugt, dass das Glas und die Glaskeramik 0 bis 11,0, insbesondere 1,0 bis 10,0 und besonders bevorzugt 2,0 bis 8,0 Gew.-% weiteres Oxid zweiwertiger Elemente Me"O enthalten. Der Begriff "weiteres Oxid zweiwertiger Elemente Me"O" bezeichnet zweiwertige Oxide mit Ausnahme von SnO, wobei dieses Me"O insbesondere ausgewählt ist aus MgO, CaO, SrO, BaO und/oder ZnO. Besonders bevorzugt enthalten das Glas und die Glaskeramik mindestens eines und insbesondere alle der folgenden Oxide zweiwertiger Elemente Me"O in den angegebenen Mengen:

| Komponente | Gew.-% |
|---|---|
| MgO | 0 bis 2,0 |
| CaO | 0 bis 2,5 |
| SrO | 0 bis 4,0 |
| ZnO | 0 bis 2,2 |

Weiterhin ist es bevorzugt, dass das Glas und die Glaskeramik 0 bis 3,0 und insbesondere 0 bis 1,0 Gew.-% BaO enthalten und besonders bevorzugt im Wesentlichen frei von BaO sind.

Es ist auch bevorzugt, dass das Glas und die Glaskeramik 0 bis 2,0, insbesondere 0 bis 1,5, weiter bevorzugt 0 bis 1,0 und besonders bevorzugt 0,1 bis 1,0 Gew.-% MgO enthalten.

In einer weiteren bevorzugten Ausführungsform enthalten das Glas und die Glaskeramik Gew.-% 0 bis 2,5, insbesondere 0 bis 1,8, weiter bevorzugt 0 bis 1,4 und besonders bevorzugt 0,1 bis 1,4 Gew.-% CaO.

Darüber hinaus ist es bevorzugt, dass das Glas und die Glaskeramik 0 bis 3,0, weiter bevorzugt 0 bis 2,8, insbesondere 0 bis 2,5 und besonders bevorzugt 0,1 bis 2,5 Gew.-% SrO enthalten.

In einer bevorzugten Ausführungsform enthalten das Glas und die Glaskeramik 0 bis 2,2, insbesondere 0 bis 1,7, weiter bevorzugt 0 bis 1,3 und besonders bevorzugt 0,1 bis 1,3 Gew.-% ZnO.

Es sind weiter ein Glas und eine Glaskeramik bevorzugt, die 0 bis 8,0, insbesondere 0 bis 7,0 und besonders bevorzugt 2,0 bis 6,8 Gew.-% weiteres Oxid dreiwertiger Elemente Me^{lll}₂O₃ enthalten. Der Begriff "weiteres Oxid dreiwertiger Elemente Me^{lll}O₃" bezeichnet dreiwertige Oxide mit Ausnahme von Ce₂O₃, wobei dieses Me^{lll}₂O₃ insbesondere ausgewählt ist aus Al₂O₃, B₂O₃, Y₂O₃, La₂O₃, Dy₂O₃, Ga₂O₃ und/oder In₂O₃ und bevorzugt ausgewählt ist aus Al₂O₃, B₂O₃, Y₂O₃ und/oder La₂O₃.

In einer bevorzugten Ausführungsform enthalten das Glas und die Glaskeramik ferner 0 bis 8,0, insbesondere 0 bis 6,8, weiter bevorzugt 1,0 bis 6,0 und besonders bevorzugt 2,0 bis 4,0 Gew.-% Al₂O₃.

Ferner können das Glas und die Glaskeramik weiteres Oxid vierwertiger Elemente Me^{IV}O₂ in einer Menge von 0 bis 2,0, vorzugsweise 0 bis 1,5, insbesondere 0 bis 1,0 und bevorzugt 0,1 bis 1,0 Gew.-% enthalten. Der Begriff "weiteres Oxid vierwertiger Elemente Me^{IV}O₂" bezeichnet vierwertige Oxide mit Ausnahme von SiO₂, CeO₂ und SnO₂, wobei dieses Me^{lV}O₂ insbesondere ausgewählt ist aus ZrO₂,TiO₂ und/oder GeO₂.

Es ist zudem bevorzugt, dass das Glas und die Glaskeramik 0 bis 2,0, insbesondere 0 bis 1,5, weiter bevorzugt 0 bis 1,0 und besonders bevorzugt 0,1 bis 1,0 Gew.-% ZrO₂ enthalten.

In einer bevorzugten Ausführungsform enthalten das Glas und die Glaskeramik ferner Oxid fünfwertiger Elemente Me^{V}₂O₅ in einer Menge von 0 bis 8,0, insbesondere 0 bis 7,0, bevorzugt 1,0 bis 7,0, weiter bevorzugt 2,0 bis 6,8 und besonders bevorzugt 3,0 bis 6,5 Gew.-% wobei dieses Me^{V}₂O₅ insbesondere ausgewählt ist aus P₂O₅, V₂O₅, Ta₂O₅ und/oder Nb₂O₅ und besonders bevorzugt ausgewählt ist aus P₂O₅ und/oder Ta₂O₅. Dabei kann P₂O₅ insbesondere als Keimbildner fungieren. Das Vorhandensein eines Keimbildners ist jedoch erfindungsgemäß nicht zwingend erforderlich.

Weiterhin ist es bevorzugt, dass das Glas und die Glaskeramik 0 bis 8,0, insbesondere 0 bis 7,0, weiter bevorzugt 0 bis 6,8 und besonders bevorzugt 1,0 bis 6,5 Gew.-% P₂O₅ enthalten.

Weiterhin können das Glas und die Glaskeramik 0 bis 5,0 und insbesondere 0 bis 2,0 Gew.-% Fluor enthalten.

Besonders bevorzugt sind ein Glas und eine Glaskeramik, die mindestens eine und bevorzugt alle der folgenden Komponenten in den angegebenen Mengen enthalten:

| Komponente | Gew.-% |
|---|---|
| SiO₂ | 48,0 bis 75,0 |
| Li₂O | 8,0 bis 20,5 |
| Cer, berechnet als CeO₂ | 4,0 bis 20,0 |
| Zinn, berechnet als SnO | 3,1 bis 15,7 |
| Me^{l}₂O | 0 bis 11,5 |
| Me^{ll}O | 0 bis 11,0 |
| Me^{lll}₂O₃ | 0 bis 8,0 |
| Me^{lv}O₂ | 0 bis 2,0 |
| Me^{V}₂O₅ | 0 bis 8,0 |
| Terbium, berechnet als Tb₄O₇ | 0 bis 3,5 |
| Fluor | 0 bis 5,0, |

wobei Me^{l}₂O, Me"O, Me^{lll}₂O₃, Me^{IV}O₂ und Me^{V}₂O₅ insbesondere die oben angegebenen Bedeutungen haben.

In einer weiteren bevorzugten Ausführungsform enthalten das Glas und die Glaskeramik mindestens eine und bevorzugt alle der folgenden Komponenten in den angegebenen Mengen:

| Komponente | Gew.-% |
|---|---|
| SiO₂ | 48,0 bis 75,0 |
| Li₂O | 8,0 bis 20,5 |
| Cer, berechnet als CeO₂ | 4,0 bis 20,0 |
| Zinn, berechnet als SnO | 3,1 bis 15,7 |
| K₂O | 0 bis 11,0 |
| Al₂O₃ | 0 bis 8,0 |
| MgO | 0 bis 2,0 |
| CaO | 0 bis 2,5 |
| SrO | 0 bis 4,0 |
| ZnO | 0 bis 2,2 |
| Terbium, berechnet als Tb₄O₇ | 0 bis 3,5 |
| P₂O₅ | 0 bis 8,0 |
| ZrO₂ | 0 bis 2,0. |

In einer weiteren besonders bevorzugten Ausführungsform enthalten das Glas und die Glaskeramik mindestens eine und bevorzugt alle der folgenden Komponenten in den angegebenen Mengen:

| Komponente | Gew.-% |
|---|---|
| SiO₂ | 52,0 bis 70,1 |
| Li₂O | 10,1 bis 18,2 |
| Cer, berechnet als CeO₂ | 4,3 bis 19,0 |
| Zinn, berechnet als SnO | 3,4 bis 14,9 |
| K₂O | 0 bis 9,3 |
| Al₂O₃ | 0 bis 6,8 |
| MgO | 0 bis 1,0 |
| CaO | 0 bis 1,4 |
| SrO | 0 bis 2,5 |
| ZnO | 0 bis 1,3 |
| Terbium, berechnet als Tb₄O₇ | 0 bis 2,6 |
| P₂O₅ | 0 bis 6,1 |
| ZrO₂ | 0 bis 1,0 |

Es ist noch weiter bevorzugt, dass das Glas und die Glaskeramik in dieser Ausführungsform 4,7 bis 18,5 Gew.-% Cer, berechnet als CeO₂, und 3,7 bis 14,5 Gew.-% Zinn, berechnet als SnO, insbesondere 5,3 bis 17,9 Gew.-% Cer, berechnet als CeO₂, und 4,1 bis 14,0 Gew.-% Zinn, berechnet als SnO, weiter bevorzugt 5,8 bis 16,6 Gew.-% Cer, berechnet als CeO₂, und 4,6 bis 13,0 Gew.-% Zinn, berechnet als SnO, und besonders bevorzugt 6,1 bis 16,0 Gew.-% Cer, berechnet als CeO₂, und 4,7 bis 12,6 Gew.-% Zinn, berechnet als SnO, enthalten.

Die Erfindung betrifft ebenfalls Vorstufen mit entsprechender Zusammensetzung, aus denen die erfindungsgemäße Glaskeramik durch Wärmebehandlung hergestellt werden kann. Diese Vorstufen sind ein entsprechend zusammengesetztes Glas (auch als Ausgangsglas bezeichnet) und ein entsprechend zusammengesetztes Glas mit Keimen. Die Bezeichnung "entsprechender Zusammensetzung" bedeutet, dass diese Vorstufen die gleichen Komponenten in den gleichen Mengen wie die Glaskeramik enthalten, wobei die Komponenten mit Ausnahme von Fluor als Oxide berechnet werden, so wie es bei Gläsern und Glaskeramiken üblich ist.

Die Erfindung betrifft ebenfalls ein erfindungsgemäßes Glas, das Keime für die Kristallisation enthält. Durch Wärmebehandlung des erfindungsgemäßen Glases kann zunächst das erfindungsgemäße Glas mit Keimen erzeugt werden, welches seinerseits durch weitere Wärmebehandlung in die erfindungsgemäße Glaskeramik umgewandelt werden kann.

Die Erfindung betrifft ferner ein erfindungsgemäßes Glas und eine erfindungsgemäße Glaskeramik, die bei Anregung mit Licht einer Wellenlänge von 380 bis 430 nm, insbesondere 395 nm, eine weißlich-blaue Fluoreszenzfarbe im CIE-Farbraum aufweisen.

Die Erfindung betrifft auch ein Verfahren zur Herstellung des erfindungsgemäßen Glases oder der erfindungsgemäßen Glaskeramik, bei dem das Zinn zumindest teilweise in zweiwertiger Form und insbesondere als SnO eingesetzt wird.

Bei der Herstellung der erfindungsgemäßen Gläser und Glaskeramiken wird insbesondere eine Mischung von geeigneten Ausgangsmaterialien, wie z.B. Carbonaten, Oxiden, Phosphaten und Fluoriden, erschmolzen. In einer bevorzugten Ausführungsform werden die Ausgangsmaterialien der Komponenten der erfindungsgemäßen Gläser und Glaskeramiken bei einer Temperatur von 1400 bis 1800°C, insbesondere 1450 bis 1600°C und besonders bevorzugt etwa 1500°C für insbesondere 20 min bis 10 h erschmolzen. Zur Erzielung einer besonders hohen Homogenität wird die erhaltene Glasschmelze in Wasser gegossen, um ein Glasgranulat zu bilden, und das erhaltene Granulat wird dann erneut aufgeschmolzen.

Die Schmelze kann in Formen gegossen werden, um Rohlinge des Ausgangsglases, sogenannte Massivglasrohlinge oder monolithische Rohlinge, zu erzeugen.

Es ist ebenfalls möglich, die Schmelze erneut in Wasser zu geben, um ein Granulat herzustellen. Dieses Granulat kann dann nach Mahlen und gegebenenfalls Zugabe weiterer Komponenten, wie Färbemitteln, zu einem Rohling, einem sogenannten Pulverpressling, gepresst werden.

Schließlich kann das Ausgangsglas nach Granulierung auch zu einem Pulver verarbeitet werden.

Aus dem Glas, z.B. in Form eines Massivglasrohlings, eines Pulverpresslings oder eines Pulvers, kann dann durch Wärmebehandlung das Glas mit Keimen erzeugt werden. Dies wird auch als Keimbildungsprozess bezeichnet. Die Erfindung ist daher ebenfalls auf ein Verfahren zur Herstellung des Glases mit Keimen gerichtet, bei dem das Glas einer Wärmebehandlung bei einer Temperatur von 450 bis 600°C und insbesondere 470 bis 550°C für eine Dauer von insbesondere 5 bis 120 min und vorzugsweise 10 bis 60 min unterworfen wird.

Aus dem Glas mit Keimen kann dann durch Wärmebehandlung die erfindungsgemäße Glaskeramik gebildet werden. Die Erfindung ist daher ebenfalls auf ein Verfahren zur Herstellung der erfindungsgemäßen Glaskeramik gerichtet, bei dem das Glas, insbesondere das Glas mit Keimen, mindestens einer Wärmebehandlung bei einer Temperatur von 700 bis 950°C für eine Dauer von insbesondere 5 bis 120 min und vorzugsweise 10 bis 60 min unterworfen wird.

Das erfindungsgemäße Glas und das erfindungsgemäße Glas mit Keimen werden vorzugsweise in Form eines Pulvers oder Pulverpresslings der mindestens einen Wärmebehandlung zur Herstellung der Glaskeramik unterzogen.

In einer weiteren bevorzugten Ausführungsform erfolgt die mindestens eine Wärmebehandlung im Rahmen eines Aufsinterns, insbesondere eines Pulvers.

Somit betrifft die Erfindung in einer bevorzugten Ausführungsform ein Verfahren zur Herstellung der erfindungsgemäßen Glaskeramik, bei dem
(a) Pulver des erfindungsgemäßen Glases, gegebenenfalls nach Zugabe weiterer Komponenten, wie z.B. anderer Gläser, Glaskeramiken und/oder Presshilfsmitteln, zu einem Pulverpressling gepresst wird, und
(b) der Pulverpressling einer Wärmebehandlung bei einer Temperatur von 700 bis 950°C für eine Dauer von insbesondere 5 bis 120 min unterworfen wird.

Dabei kann gegebenenfalls vor der Wärmebehandlung in Schritt (b) eine Keimbildung vorgenommen werden.

Darüber hinaus betrifft die Erfindung die Verwendung des erfindungsgemäßen Glases und der erfindungsgemäßen Glaskeramik mit hohem Gehalt an Cer und Zinn zur Einstellung der Fluoreszenz eines anderen Glases und einer anderen Glaskeramik. Ein Glas und eine Glaskeramik, die das erfindungsgemäße Glas oder die erfindungsgemäße Glaskeramik enthalten, stellen daher einen weiteren Gegenstand der Erfindung dar. Dabei sind ein Glas und eine Glaskeramik besonders bevorzugt, die das erfindungsgemäße Glas oder die erfindungsgemäße Glaskeramik mit Gehalt an Cer und Zinn in einer Menge von 0,1 bis 60 Gew.%, insbesondere 1 bis 58 Gew.-%, bevorzugt 5 bis 56 Gew.-%, besonders bevorzugt 10 bis 54 Gew.-% und ganz besonders bevorzugt 15 bis 52 Gew.-% enthalten, bezogen auf die Gesamtmenge von Glas oder Glaskeramik und erfindungsgemäßem Glas oder erfindungsgemäßer Glaskeramik.

Das erfindungsgemäße Glas und die erfindungsgemäße Glaskeramik mit hohem Gehalt an Cer und Zinn können insbesondere in Kombination mit einer Vielzahl von anderen Gläsern und/oder Glaskeramiken verwendet werden, wobei die Kombinationen insbesondere als Dentalmaterialien eingesetzt werden können. Besonders bevorzugt können die Kombinationen in Form von Sinterrohlingen vorliegen. Beispiele anderer Gläser und Glaskeramiken zur Herstellung von Kombinationen sind in DE 43 14 817 A1, DE 44 23 793 C1, DE 44 23 794 C1, DE 44 28 839 A1, DE 196 47 739 A1, DE 197 25 552 A1, DE 100 31 431 A1, EP 0 827 941 A1, EP 0 916 625 A1, WO 00/34196 A2, EP 1 505 041 A1, EP 1 688 398 A1, EP 2 287 122 A1, EP 2 377 831 A1, EP 2 407 439 A1, WO 2013/053863 A2, WO 2013/053864 A2, WO 2013/053865 A2, WO 2013/053866 A2, WO 2013/053867 A2, WO 2013/053868 A2, WO 2013/164256 A1, WO 2014/170168 A1, WO 2014/170170 A2, WO 2015/067643 A1, WO 2015/155038 A1, WO 2015/173394 A1, WO 2016/120146 A1, WO 2017/032745 A1, WO 2017/055010 A1 offenbart. Diese Gläser und Glaskeramiken gehören zur Silikat-, Borat-, Phosphat- oder Alumosilikat-Gruppe. Bevorzugte Gläser und Glaskeramiken sind vom SiO₂-Al₂O₃-K₂O-Typ (mit kubischen oder tetragonalen Leucit-Kristallen), SiO₂-B₂O₃-Na₂O-Typ, Alkali-Silikat-Typ, Alkali-Zink-Silikat-Typ, Silico-Phosphat-Typ und/oder SiO₂-ZrO₂-Typ. Besonders bevorzugt sind Lithiumsilikat-Glaskeramiken und insbesondere Glaskeramiken, die Lithiummetasilikat oder Lithiumdisilikat als Hauptkristallphase und gegebenenfalls weitere Kristallphasen wie Lithiummetasilikat, Lithiumdisilikat, Apatit, Diopsid, Spodumen, Petalit, Eucryptitund/oder Wollastonit enthalten, sowie Glaskeramiken, die SiO₂, insbesondere in Form von Tiefquarz-Mischkristall und/oder Hochquarz-Mischkristall, als Hauptkristallphase enthalten. Durch Vermischen derartiger Gläser oder Glaskeramiken mit den erfindungsgemäßen Gläsern und/oder Glaskeramiken mit hohem Gehalt an Cer und Zinn können insbesondere die Fluoreszenzeigenschaften in gewünschter Weise eingestellt werden.

Das erfindungsgemäße Glas und die erfindungsgemäße Glaskeramik, insbesondere in Form von Kombinationen, liegen insbesondere in Form von Pulvern, Granulaten, Pasten, Aerosolen oder Rohlingen in beliebiger Form und Größe, z.B. monolithischen Rohlingen, wie Plättchen, Quadern oder Zylindern, oder Pulverpresslingen, in ungesinterter, teilgesinterter oder dichtgesinterter Form, vor. In diesen Formen können sie einfach weiterverarbeitet werden, z.B. zu dentalen Restaurationen. Sie können aber auch in Form von dentalen Restaurationen, wie Inlays, Onlays, Kronen, Teilkronen, Brücken, Veneers, Schalen oder Abutments, oder als Beschichtung einer dentalen Restauration vorliegen.

Aus den erfindungsgemäßen Glaskeramiken und den erfindungsgemäßen Gläsern, insbesondere in Form von Kombinationen, können dentale Restaurationen, wie Inlays, Onlays, Kronen, Teilkronen, Brücken, Veneers, Schalen oder Abutments, hergestellt werden. Die Erfindung betrifft daher deren Verwendung als Dentalmaterial und insbesondere deren Verwendung zur Herstellung einer dentalen Restauration. Dabei ist es bevorzugt, dass der Glaskeramik und dem Glas durch Verpressen, Sintern oder maschinelle Bearbeitung die Form der gewünschten dentalen Restauration gegeben wird.

Das Verpressen erfolgt üblicherweise unter erhöhtem Druck und erhöhter Temperatur. Es ist bevorzugt, dass das Verpressen bei einer Temperatur von 700 bis 1150°C und insbesondere 700 bis 1000°C erfolgt. Weiter ist es bevorzugt, das Verpressen bei einem Druck von 10 bis 30 bar durchzuführen. Beim Verpressen wird durch viskoses Fließen des eingesetzten Materials die gewünschte Formänderung erreicht. Es können für das Verpressen das erfindungsgemäße Glas und das erfindungsgemäße Glas mit Keimen sowie bevorzugt die erfindungsgemäße Glaskeramik verwendet werden. Dabei können die erfindungsgemäßen Gläser und Glaskeramiken insbesondere in Form von Rohlingen in beliebiger Form und Größe, z.B. Pulverpresslingen in ungesinterter, teilgesinterter oder dichtgesinterter Form, eingesetzt werden.

Die maschinelle Bearbeitung erfolgt üblicherweise durch materialabtragende Verfahren und insbesondere durch Fräsen und/oder Schleifen. Es ist besonders bevorzugt, dass die maschinelle Bearbeitung im Rahmen eines CAD/CAM-Verfahrens durchgeführt wird. Für die maschinelle Bearbeitung können das erfindungsgemäße Glas, das erfindungsgemäße Glas mit Keimen sowie die erfindungsgemäße Glaskeramik verwendet werden. Dabei können die erfindungsgemäßen Gläser und Glaskeramiken insbesondere in Form von Rohlingen, z.B. ungesinterten, teilgesinterten oder dichtgesinterten Pulverpresslingen, eingesetzt werden. Für die maschinelle Bearbeitung wird bevorzugt die erfindungsgemäße Glaskeramik verwendet. Die erfindungsgemäße Glaskeramik kann auch in einer noch nicht vollständig kristallisierten Form eingesetzt werden, die durch Wärmebehandlung bei niedrigerer Temperatur erzeugt wurde. Dies bietet den Vorteil, dass eine leichtere maschinelle Bearbeitung und damit der Einsatz von einfacheren Apparaten zur maschinellen Bearbeitung möglich sind. Nach der maschinellen Bearbeitung eines solchen teilkristallisierten Materials wird dieses regelmäßig einer weiteren Wärmebehandlung unterzogen, um eine weitere Kristallisation hervorzurufen.

Die erfindungsgemäßen Glaskeramiken und die erfindungsgemäßen Gläser, insbesondere in Form von Kombinationen, eignen sich auch zur Beschichtung von z.B. Keramiken, Glaskeramiken und Metallen. Unter "Beschichtungen", die unter Verwendung der erfindungsgemäßen Gläser und erfindungsgemäßen Glaskeramiken, insbesondere in Form von Kombinationen, hergestellt werden können, sind z.B. auch Glasuren zu verstehen.

Die Erfindung ist daher ebenfalls auf die Verwendung des erfindungsgemäßen Glases und der erfindungsgemäßen Glaskeramik, insbesondere in Form von Kombinationen, zur Beschichtung von insbesondere Keramiken, Glaskeramiken und Metallen gerichtet. Das Beschichten umfasst vorzugsweise, dass erfindungsgemäßes Glas oder erfindungsgemäße Glaskeramik, insbesondere in Form von Kombinationen, auf ein Substratmaterial aufgebracht wird und zusammen mit dem Substratmaterial einer Wärmebehandlung, vorzugsweise bei einer Temperatur von mindestens 600°C, insbesondere 600 bis 1150°C und besonders bevorzugt 700 bis 1000°C, unterzogen wird.

Dies kann insbesondere durch Aufsintern und bevorzugt durch Aufpressen erfolgen. Beim Aufsintern werden die Glaskeramik und das Glas in üblicher Weise, z.B. als Pulver, Paste oder Aerosol, auf das zu beschichtende Material, wie Keramik, Glaskeramik oder Metall, aufgebracht und anschließend gesintert. Bei dem bevorzugten Aufpressen wird erfindungsgemäße Glaskeramik und erfindungsgemäßes Glas, z.B. in Form von Pulverpresslingen, bei einer erhöhten Temperatur, von z.B. 700 bis 1150°C und insbesondere 700 bis 1000°C, und unter Anwendung von Druck, z.B. 10 bis 30 bar, aufgepresst. Hierzu können insbesondere die in der EP 231 773 beschriebenen Verfahren und der dort offenbarte Pressofen eingesetzt werden. Geeignete kommerzielle Öfen sind die Öfen vom Typ Programat von Ivoclar Vivadent AG, Liechtenstein.

Aufgrund der vorstehend geschilderten Eigenschaften der erfindungsgemäßen Glaskeramiken und der erfindungsgemäßen Gläser eignen sich diese insbesondere zum Einsatz in der Zahnheilkunde. Gegenstand der Erfindung ist daher auch die Verwendung der erfindungsgemäßen Glaskeramik und des erfindungsgemäßen Glases, insbesondere in Form von Kombinationen, als Dentalmaterial und insbesondere zur Herstellung einer dentalen Restauration oder zur Beschichtung einer dentalen Restauration, wie einer Krone, einer Brücke und eines Abutments.

Besonders bevorzugt ist die Verwendung zur Beschichtung einer dentalen Restauration, wobei ein Substratmaterial, insbesondere eine Glaskeramik, eine Keramik oder ein Metall, mit erfindungsgemäßem Glas oder erfindungsgemäßer Glaskeramik, insbesondere in Form von Kombinationen, beschichtet wird. Besonders bevorzugt ist die dentale Restauration ausgewählt aus Inlay, Onlay, Krone, Teilkrone, Brücke, Veneer, Schale und Abutment.

Die Verwendung zur Beschichtung dentaler Restaurationen umfasst vorzugsweise, dass erfindungsgemäßes Glas oder erfindungsgemäße Glaskeramik, insbesondere in Form einer Kombination, auf ein Substratmaterial aufgebracht wird und zusammen mit dem Substratmaterial einer Wärmebehandlung, vorzugsweise bei einer Temperatur von mindestens 600°C, insbesondere 600 bis 1150°C und besonders bevorzugt 700 bis 1000°C, unterzogen wird. Das Aufbringen des erfindungsgemäßen Glases oder der erfindungsgemäßen Glaskeramik, insbesondere in Form einer Kombination, erfolgt dabei in üblicher Weise, z.B. als Pulver, Paste oder Aerosol.

Die Erfindung betrifft mithin auch ein Verfahren zur Herstellung einer dentalen Restauration, insbesondere Inlay, Onlay, Krone, Teilkrone, Brücke, Veneer, Schale oder Abutment, bei dem der erfindungsgemäßen Glaskeramik oder dem erfindungsgemäßen Glas, insbesondere in Form von Kombinationen, durch Verpressen, Sintern oder maschinelle Bearbeitung, insbesondere im Rahmen eines CAD/CAM-Verfahrens, die Form der gewünschten dentalen Restauration gegeben wird.

Die Erfindung betrifft zudem ein Verfahren zur Beschichtung einer dentalen Restauration, insbesondere Inlay, Onlay, Krone, Teilkrone, Brücke, Veneer, Schale oder Abutment, bei dem das erfindungsgemäße Glas oder die erfindungsgemäße Glaskeramik, insbesondere in Form einer Kombination, auf ein Substratmaterial aufgebracht wird und zusammen mit dem Substratmaterial einer Wärmebehandlung, vorzugsweise bei einer Temperatur von mindestens 600°C, insbesondere 600 bis 1150°C und besonders bevorzugt 700 bis 1000°C, unterzogen wird. Das Aufbringen des erfindungsgemäßen Glases und der erfindungsgemäßen Glaskeramik, insbesondere in Form einer Kombination, erfolgt dabei in üblicher Weise, z.B. als Pulver, Paste oder Aerosol. Vorzugsweise ist das Substratmaterial eine Glaskeramik, eine Keramik oder ein Metall.

Die Erfindung wird im Folgenden anhand von sie nicht beschränkenden Beispielen näher erläutert.

### Beispiele

### 1. Herstellung von fluoreszierenden Gläsern

Es wurden 30 erfindungsgemäße Gläser mit den in der Tabelle I angegebenen Zusammensetzungen hergestellt. Dazu wurden zunächst Ausgangsgläser mit den in der Tabelle I angegebenen Zusammensetzungen aus üblichen Rohstoffen bei 1500°C für 60 min erschmolzen. Durch Eingießen der erschmolzenen Ausgangsgläser in Wasser wurden Glasfritten hergestellt.

Zusätzlich wurden zwei Gläser als Vergleichsbeispiele nach einem entsprechenden Verfahren hergestellt. Die Zusammensetzungen dieser Gläser sind als Beispiele 31 und 32 ebenfalls in der Tabelle I angegeben. Abweichend vom Verfahren zur Herstellung der Gläser der Beispiele 1 bis 30 erfolgte das Erschmelzen zur Herstellung von Beispiel 31 bei 1650°C für 240 min.

Die für die erfindungsgemäßen Gläser in der Tabelle I ebenfalls angegebene Glasübergangstemperatur T_{g} wurde mittels DSC (Differential Scanning Calorimetry) bestimmt.

Die Fluoreszenzeigenschaften der Glasfritten wurden untersucht. Dazu wurden die Glasfritten nacheinander mit einer Quecksilberdampflampe (Anregungswellenlänge 366 nm) und mit einer UV-LED (Anregungswellenlänge 395 nm) bestrahlt und jeweils mit bloßem Auge auf Fluoreszenz untersucht.

Für die Glasfritten der Beispiele 1 bis 30 konnte sowohl bei Anregung mit der Quecksilberdampflampe als auch bei Anregung mit der UV-LED jeweils eine deutliche Fluoreszenz wahrgenommen werden.

Die Glasfritte des Beispiels 31 zeigte eine deutlich wahrnehmbare Fluoreszenz bei Bestrahlung mit der Quecksilberdampflampe (Anregungswellenlänge 366 nm). Es konnte jedoch keine Fluoreszenz bei Anregung mit der UV-LED (Anregungswellenlänge 395 nm) wahrgenommen werden. Die Untersuchung der Glasfritte von Beispiel 32 ergab, dass weder bei Bestrahlung mit der Quecksilberdampflampe noch bei Bestrahlung mit der UV-LED Fluoreszenz wahrnehmbar ist.

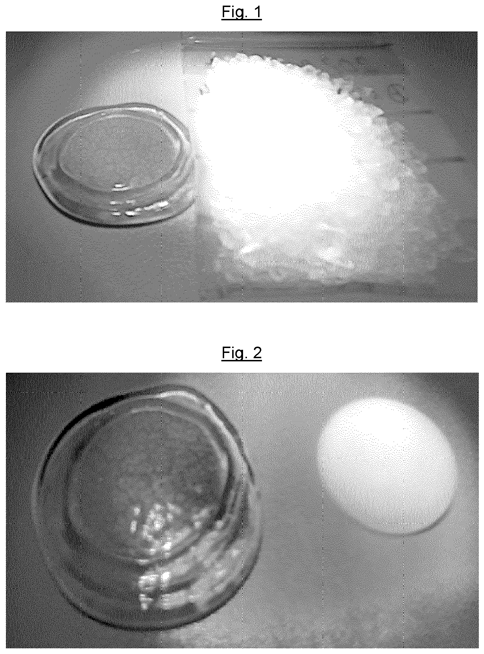

Die vorteilhafte Fluoreszenz der erfindungsgemäßen Glasfritten ist in Figur 1 veranschaulicht. Figur 1 zeigt auf der rechten Seite des Fotos die fluoreszierende Glasfritte des Beispiels 3 bei Anregung mit der UV-LED (Anregungswellenlänge 395 nm). Zum Vergleich wurde eine Massivglasscheibe aus der Glasfritte von Beispiel 31 hergestellt, indem das in der EP 3 696 149 A1 für das dortige Beispiel 5 beschriebene Verfahren durchgeführt wurde. Das Verfahren umfasste, dass die Glasfritte von Beispiel 31 für 240 min bei 1650°C erneut aufgeschmolzen wurde. Die erhaltene Schmelze wurde anschließend auf eine Kupferplatte gegossen, um eine Massivglasscheibe zu erzeugen. Die auf diese Weise erhaltene Massivglasscheibe ist auf der linken Seite des Fotos von Figur 1 abgebildet und zeigt keine Fluoreszenz.

**Tabelle 1**

| **Beispiel** | **1** | **2** | **3** | **4** | **5** | **6** | **7** | **8** | **9** | **10** | **11** | **12** |
|---|---|---|---|---|---|---|---|---|---|---|---|---|
| Zusammensetzung | Gew.-% | Gew.-% | Gew.-% | Gew.-% | Gew.-% | Gew.-% | Gew.-% | Gew.-% | Gew.-% | Gew.-% | Gew.-% | Gew.-% |
| SiO₂ | 70,1 | 67,7 | 64,5 | 61,0 | 57,9 | 54,8 | 52,0 | 68,1 | 66,5 | 64,8 | 70,1 | 69,6 |
| CeO₂ | 4,6 | 4,5 | 8,7 | 11,3 | 13,6 | 15,8 | 17,9 | 6,0 | 5,9 | 5,8 | 4,6 | 4,6 |
| SnO | 3,6 | 7,0 | 6,8 | 8,8 | 10,7 | 12,4 | 14,0 | 4,7 | 4,6 | 4,6 | 3,6 | 3,6 |
| Li₂O | 14,6 | 14,0 | 13,4 | 12,7 | 12,0 | 11,4 | 10,8 | 14,2 | 13,8 | 13,4 | 14,5 | 14,4 |
| K₂O | 3,8 | 3,6 | 3,5 | 3,3 | 3,1 | 3,0 | 2,8 | 3,7 | 3,6 | 3,5 | 3,8 | 3,8 |
| Al₂O₃ | 3,3 | 3,2 | 3,1 | 2,9 | 2,7 | 2,6 | 2,5 | 3,3 | 3,2 | 3,1 | 3,3 | 3,3 |
| P₂O₅ | - | - | - | - | - | - | - | - | 2,4 | 4,8 | - | - |
| Tb₄O₇ | - | - | - | - | - | - | - | - | - | - | 0,1 | 0,7 |
| MgO | - | - | - | - | - | - | - | - | - | - | - | - |
| CaO | - | - | - | - | - | - | - | - | - | - | - | - |
| SrO | - | - | - | - | - | - | - | - | - | - | - | - |
| ZnO | - | - | - | - | - | - | - | - | - | - | - | - |
| ZrO₂ | - | - | - | - | - | - | - | - | - | - | | - |
| Σ | 100,0 | 100,0 | 100,0 | 100,0 | 100,0 | 100,0 | 100,0 | 100,0 | 100,0 | 100,0 | 100,0 | 100,0 |
| T_{g}[°C] | 470,4 | 479,4 | 492,2 | 501,4 | 517,2 | 537,8 | 562,2 | 475 | 480 | 483,3 | 473,7 | 471,4 |

| **Beispiel** | **13** | **14** | **15** | **16** | **17** | **18** | **19** | **20** | **21** | **22** | **23** | **24** |
|---|---|---|---|---|---|---|---|---|---|---|---|---|
| Zusammensetzung | Gew.-% | Gew.-% | Gew.-% | Gew.-% | Gew.-% | Gew.-% | Gew.-% | Gew.-% | Gew.-% | Gew.-% | Gew.-% | Gew.-% |
| SiO₂ | 69,2 | 68,3 | 67,5 | 65,7 | 62,5 | 62,0 | 58,8 | 57,0 | 55,7 | 62,0 | 66,5 | 67,8 |
| CeO₂ | 4,5 | 4,5 | 4,5 | 4,4 | 8,6 | 8,5 | 9,1 | 9,0 | 8,8 | 8,9 | 8,6 | 8,5 |
| SnO | 3,6 | 3,5 | 3,5 | 3,5 | 6,7 | 6,7 | 7,1 | 7,0 | 6,9 | 7,0 | 6,7 | 6,7 |
| Li₂O | 14,4 | 14,2 | 14,0 | 13,6 | 13,0 | 12,9 | 18,2 | 17,8 | 17,3 | 15,4 | 11,8 | 10,6 |
| K₂O | 3,7 | 3,7 | 3,6 | 3,6 | 3,4 | 3,4 | 3,6 | 3,6 | 3,4 | 3,6 | 3,4 | 3,4 |
| Al₂O₃ | 3,3 | 3,2 | 3,2 | 3,1 | 3,0 | 3,0 | 3,2 | 3,1 | 3,0 | 3,1 | 3,0 | 3,0 |
| P₂O₅ | - | - | 3,7 | 6,1 | 2,8 | 3,5 | - | 2,5 | 4,9 | - | - | - |
| Tb₄O₇ | 1,3 | 2,6 | - | - | - | - | - | - | - | - | - | - |
| MgO | - | - | - | - | - | - | - | - | - | - | - | - |
| CaO | - | - | - | - | - | - | - | - | - | - | - | - |
| SrO | - | - | - | - | - | - | - | - | - | - | - | - |
| ZnO | - | - | - | - | - | - | - | - | - | - | - | - |
| ZrO₂ | - | - | - | - | - | - | - | - | - | - | - | - |
| Σ | 100,0 | 100,0 | 100,0 | 100,0 | 100,0 | 100,0 | 100,0 | 100,0 | 100,0 | 100,0 | 100,0 | 100,0 |
| T_{g}[°C] | 472,2 | 478,7 | 477,7 | 482,1 | 497,1 | 493,1 | 470,4 | 469,6 | 472,3 | 480,9 | 494,2 | 506,2 |

| **Beispiel** | **25** | **26** | **27** | **28** | **29** | **30** | **31*** | **32*** | | | | |
|---|---|---|---|---|---|---|---|---|---|---|---|---|
| Zusammensetzung | Gew.-% | Gew.-% | Gew.-% | Gew.-% | Gew.-% | Gew.-% | Gew.-% | Gew.-% | | | | |
| SiO₂ | 67,1 | 60,1 | 66,8 | 61,8 | 65,9 | 60,9 | 63,7 | 73,8 | | | | |
| CeO₂ | 8,9 | 8,5 | 8,9 | 8,6 | 4,3 | 8,3 | 7,3 | - | | | | |
| SnO | 6,9 | 6,7 | 6,9 | 6,7 | 3,4 | 6,5 | 2,8 | - | | | | |
| Li₂O | 13,9 | 12,5 | 13,9 | 12,8 | 10,9 | 10,1 | 15,8 | 15,3 | | | | |
| K₂O | - | 9,3 | 3,6 | 3,3 | 2,3 | 2,1 | 5,0 | 4,0 | | | | |
| Al₂O₃ | 3,2 | 2,9 | - | 6,8 | 2,5 | 2,3 | 5,4 | 3,5 | | | | |
| P₂O₅ | - | - | - | - | 3,5 | 3,2 | - | 3,4 | | | | |
| Tb₄O₇ | - | - | - | - | - | - | - | - | | | | |
| MgO | - | - | - | - | 1,0 | 0,9 | - | - | | | | |
| CaO | - | - | - | - | 1,4 | 1,3 | - | - | | | | |
| SrO | - | - | - | - | 2,5 | 2,3 | - | - | | | | |
| ZnO | - | - | - | - | 1,3 | 1,2 | - | - | | | | |
| ZrO₂ | - | - | - | - | 1,0 | 0,9 | - | - | | | | |
| Σ | 100,0 | 100,0 | 100,0 | 100,0 | 100,0 | 100,0 | 100,0 | 100,0 | | | | |
| T_{g}[°C] | 497,6 | 480,8 | 493,6 | 492,1 | 480,7 | 494,8 | - | - | | | | |

| | | | | | | | | | | | | |
|---|---|---|---|---|---|---|---|---|---|---|---|---|
| * Vergleich | | | | | | | | | | | | |

### 2. Verwendung der fluoreszierenden Gläser als Mischungskomponente

Die Glasfritten der Beispiele 3 und 32 wurden in einer Zirkonoxidmühle auf eine Korngröße von 45 µm aufgemahlen. Anschließend wurde die gemahlene Glasfritte des Beispiels 3 in unterschiedlichen Mengen (20, 33 und 50 Gew.-% bezogen auf die Mischung) als Mischungskomponente zu der nicht fluoreszierenden gemahlenen Glasfritte von Beispiel 32 gegeben.

Die unterschiedlichen Pulvermischungen wurden dann mittels Hydraulikpresse bei 15 bar für 10 s zu Pulverrohlingen gepresst und bei 920°C für 10 min gesintert.

Nach dem Sintern wurden die Fluoreszenzeigenschaften der gesinterten Pulverrohling mit einer Quecksilberdampflampe (Anregungswellenlänge 366 nm) und mit einer UV-LED (Anregungswellenlänge 395 nm) untersucht. Die gesinterten Pulverrohlinge zeigten sowohl bei Bestrahlung mit der Quecksilberdampflampe als auch bei Bestrahlung mit der UV-LED eine deutlich wahrnehmbare Fluoreszenz. Es wurde festgestellt, dass sich durch die Verwendung eines hohen Anteils an fluoreszierender Mischungskomponente eine intensive Fluoreszenz erzielen lässt.

### 3. Herstellung von gesinterten glaskeramischen Rohlingen

Es wurden jeweils die Glasfritten der Beispiele 9, 10, 15 bis 18, 20, 21, 29 und 30 in einer Zirkonoxidmühle auf eine Korngröße von 45 µm aufgemahlen. Die erhaltenen Glaspulver wurden mittels Hydraulikpresse bei 15 bar für 10 s zu Rohlingen verpresst und in einem Sinterofen bei einer Temperatur T_{Sinter} und einer Haltezeit von t_{Sinter} zu dichten glaskeramischen Rohlingen gesintert. Die Kristallphasen der glaskeramischen Rohlinge wurden mittels Röntgenbeugungsanalysen (XRD) bestimmt. Die Bestimmung der Massen der Kristallphasen kann nach der Rietveld-Methode erfolgen. Ein dafür geeignetes Verfahren ist z.B. in der Dissertation von M. Dittmer "Gläser und Glaskeramiken im System MgO-Al2O3-SiO2 mit ZrO2 als Keimbildner", Universität Jena 2011, beschrieben.

Die für die Herstellung der einzelnen glaskeramischen Rohlinge verwendeten Sinterbedingungen T_{Sinter} und t_{Sinter} sowie die ermittelten Kristallphasen sind in Tabelle II angegeben. Dabei bezeichnet der Begriff "Hauptkristallphase" die Kristallphase, die von allen in der Glaskeramik vorhandenen Kristallphasen den höchsten Massenanteil hat.

Die Fluoreszenz der erhaltenen glaskeramischen Körper wurde unter einer Quecksilberdampflampe (Anregungswellenlänge 366 nm) und einer UV-LED (Anregungswellenlänge 395 nm) bestimmt. Alle gesinterten glaskeramischen Körper zeigten eine deutlich wahrnehmbare Fluoreszenz bei Bestrahlung mit der Quecksilberdampflampe und auch bei Bestrahlung mit der UV-LED.

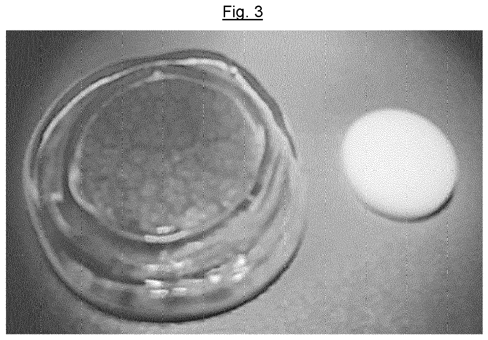

Die vorteilhafte Fluoreszenz der erfindungsgemäßen glaskeramischen Rohlinge wird durch die Figuren 2 und 3 veranschaulicht. Figur 2 zeigt auf der rechten Seite des Fotos den fluoreszierenden glaskeramischen Rohling von Beispiel 15 bei Anregung mit der UV-LED (Anregungswellenlänge 395 nm). In der Figur 3 ist auf der rechten Seite des Fotos der fluoreszierende glaskeramische Rohling von Beispiel 17 bei Anregung mit der UV-LED (Anregungswellenlänge 395 nm) dargestellt. In den Figuren 2 und 3 ist jeweils auf der linken Seite der Fotos eine nicht fluoreszierende Massivglasscheibe gezeigt, die nach demselben Verfahren hergestellt wurde wie die in Figur 1 dargestellte Massivglasscheibe.

**Tabelle II**

| **Aufgemahlene Glasfritte von Beispiel** | **9** | **10** | **15** | **16** | **17** | **18** | **20** | **21** | **29** | **30** |
|---|---|---|---|---|---|---|---|---|---|---|
| T_{Sinter} [°C] | 900 | 900 | 920 | 920 | 920 | 920 | 950 | 950 | 850 | 850 |
| t_{Sinter} [min] | 10 | 10 | 10 | 10 | 10 | 10 | 10 | 10 | 10 | 10 |
| Hauptkristallphase | LizSizOs | LizSizOs | LizSizOs | LizSizOs | LizSizOs | LizSizOs | Li₂SiO₃ | Li₂SiO₃ | LizSizOs | LizSizOs |
| Weitere Kristallphasen | SnO₂ | SnO₂ | Li₃PO₄ | Li₃PO₄ | SnO₂ | SnO₂ | SnO₂ | SnO₂ | Quarz-Mischkristall Cristobalit Li₃PO₄ | Quarz-Mischkristall Cristobalit Li₃PO₄ |
| | Li₂SiO₃ | LiaPOa | | | Li₂SiO₃ | Li₂SiO₃ | Li₃PO₄ | LiaPOa | | |
| | LiaPOa | | | | LiaPOa | LiaPOa | | | | |

## Patentansprüche

1. Glas und Glaskeramik mit Gehalt an Cer und Zinn, die die folgenden Komponenten enthalten:
| Komponente | Gew.-% | | |
|---|---|---|---|
| SiO₂ | 48,0 | bis | 75,0 |
| Li₂O | 8,0 | bis | 20,5 |
| Cer, berechnet als CeO₂ | 4,0 | bis | 20,0 |
| Zinn, berechnet als SnO | 3,1 | bis | 15,7 |

2. Glas und Glaskeramik nach Anspruch 1, die 50,0 bis 72,0, insbesondere 52,0 bis 70,1 und besonders bevorzugt 57,0 bis 70,1 Gew.-% SiO₂ enthalten.

3. Glas und Glaskeramik nach Anspruch 1 oder 2, die 9,0 bis 19,0, insbesondere 10,1 bis 18,2 und besonders bevorzugt 10,9 bis 17,3 Gew.-% Li₂O enthalten.

4. Glas und Glaskeramik nach einem der Ansprüche 1 bis 3, die 4,3 bis 19,0, vorzugsweise 4,7 bis 18,5, insbesondere 5,3 bis 17,9, weiter bevorzugt 5,8 bis 16,6 Gew.-% und besonders bevorzugt 6,1 bis 16,0 Gew.-% Cer, berechnet als CeO₂, enthalten.

5. Glas und Glaskeramik nach einem der Ansprüche 1 bis 4, die 3,4 bis 14,9, vorzugsweise 3,7 bis 14,5, insbesondere 4,1 bis 14,0, weiter bevorzugt 4,6 bis 13,0 Gew.-% und besonders bevorzugt 4,7 bis 12,6 Gew.-% Zinn, berechnet als SnO, enthalten.

6. Glas und Glaskeramik nach einem der Ansprüche 1 bis 5, bei denen das molare Verhältnis von Cer, berechnet als CeO₂, zu Zinn, berechnet als SnO, im Bereich von 1,5:1 bis 1:1,5, vorzugsweise 1,2:1 bis 1:1,2, und insbesondere 1,1:1 bis 1:1,1 liegt und besonders bevorzugt 1,0:1,0 beträgt.

7. Glas und Glaskeramik nach einem der Ansprüche 1 bis 6, die mindestens eine und bevorzugt alle der folgenden Komponenten in den angegebenen Mengen enthalten:
| Komponente | Gew.-% | | |
|---|---|---|---|
| SiO₂ | 48,0 | bis | 75,0 |
| Li₂O | 8,0 | bis | 20,5 |
| Cer, berechnet als CeO₂ | 4,0 | bis | 20,0 |
| Zinn, berechnet als SnO | 3,1 | bis | 15,7 |
| Me^{l}₂O | 0 | bis | 11,5 |
| Me^{ll}O | 0 | bis | 11,0 |
| Me^{lll}₂O₃ | 0 | bis | 8,0 |
| Me^{lv}O₂ | 0 | bis | 2,0 |
| Me^{V}₂O₅ | 0 | bis | 8,0 |
| Terbium, berechnet als Tb₄O₇ | 0 | bis | 3,5 |
| Fluor | 0 | bis | 5,0, |
wobei
Me^{l}₂O insbesondere ausgewählt ist aus Na₂O, K₂O, Rb₂O und/oder Cs₂O,
Me"O insbesondere ausgewählt ist aus MgO, CaO, SrO, BaO und/oder ZnO,
Me^{lll}₂O₃ insbesondere ausgewählt ist aus B₂O₃, Y₂O₃, La₂O₃, Ga₂O₃ und/oder In₂O₃,
Me^{lv}O₂ insbesondere ausgewählt ist aus ZrO₂, TiO₂ und/oder GeO₂,
Me^{V}₂O₅ insbesondere ausgewählt ist aus P₂O₅, V₂O₅, Ta₂O₅ und/oder Nb₂O₅.

8. Glas und Glaskeramik nach einem der Ansprüche 1 bis 7, die mindestens eine und bevorzugt alle der folgenden Komponenten in den angegebenen Mengen enthalten:
| Komponente | Gew.-% | | |
|---|---|---|---|
| SiO₂ | 48,0 | bis | 75,0 |
| Li₂O | 8,0 | bis | 20,5 |
| Cer, berechnet als CeO₂ | 4,0 | bis | 20,0 |
| Zinn, berechnet als SnO | 3,1 | bis | 15,7 |
| K₂O | 0 | bis | 11,0 |
| Al₂O₃ | 0 | bis | 8,0 |
| MgO | 0 | bis | 2,0 |
| CaO | 0 | bis | 2,5 |
| SrO | 0 | bis | 4,0 |
| ZnO | 0 | bis | 2,2 |
| Terbium, berechnet als Tb₄O₇ | 0 | bis | 3,5 |
| P₂O₅ | 0 | bis | 8,0 |
| ZrO₂ | 0 | bis | 2,0 |

9. Glas nach einem der Ansprüche 1 bis 8, das Keime für die Kristallisation enthält.

10. Glas und Glaskeramik, die das Glas oder die Glaskeramik mit Gehalt an Cer und Zinn nach einem der Ansprüche 1 bis 9 enthalten, vorzugsweise in einer Menge von 0,1 bis 60 Gew.-%, insbesondere 1 bis 58 Gew.-%, bevorzugt 5 bis 56 Gew.-%, besonders bevorzugt 10 bis 54 Gew.-% und ganz besonders bevorzugt 15 bis 52 Gew.-%.

11. Glas und Glaskeramik nach einem der Ansprüche 1 bis 10, wobei das Glas und die Glaskeramik in Form von einem Pulver, einem Granulat, einer Paste, einem Aerosol, einem Rohling, einer dentalen Restauration oder einer Beschichtung einer dentalen Restauration vorliegen.

12. Verfahren zur Herstellung des Glases und der Glaskeramik gemäß einem der Ansprüche 1 bis 11, bei dem das Zinn mindestens teilweise in zweiwertiger Form und insbesondere als SnO eingesetzt wird.

13. Verfahren nach Anspruch 12, bei dem die Ausgangsmaterialien der Komponenten des Glases oder der Glaskeramik bei einer Temperatur von 1400°C bis 1800°C, insbesondere 1450 bis 1600°C und besonders bevorzugt etwa 1500°C für vorzugsweise 20 min bis 10 h erschmolzen werden.

14. Verwendung des Glases oder der Glaskeramik gemäß einem der Ansprüche 1 bis 10 als Mischungskomponente zur Einstellung der Fluoreszenz eines Glases oder einer Glaskeramik.

15. Verwendung des Glases oder der Glaskeramik gemäß einem der Ansprüche 1 bis 11 als Dentalmaterial und insbesondere zur Herstellung oder Beschichtung einer dentalen Restauration.

16. Verfahren zur Herstellung einer dentalen Restauration, insbesondere Inlay, Onlay, Krone, Teilkrone, Brücke, Veneer, Schale oder Abutment, bei dem dem Glas oder der Glaskeramik gemäß einem der Ansprüche 1 bis 11 durch Verpressen, Sintern oder maschinelle Bearbeitung, insbesondere im Rahmen eines CAD/CAM-Verfahrens, die Form der gewünschten dentalen Restauration gegeben wird.
